# EUROPEAN PATENT APPLICATION

(11) **EP 4 563 315 A1**
(43) Date of publication of application: **04.06.2025**
(21) Application number: 23928353.4
(22) Date of filing: 03.11.2023
(51) Int. Cl.: B29C 33/00

(54) **DUAL-JOINT MOLD TURNING DEVICE**

(30) Priority: 23.03.2023 CN 202320627274 U
(71) Applicant: Shandong Shuangyi Technology Co., Ltd., Dezhou, Shandong 253000 (CN)
(72) Inventor: CUI, Xiaozhi, Dezhou, Shandong 253000 (CN); SU, Yong, Dezhou, Shandong 253000 (CN)
(74) Representative: 2K Patentanwälte Blasberg Kewitz & Reichel
(86) International application number: PCT/CN2023/129682
(87) International publication number: WO 2024/193049

(57) **Abstract**

The disclosure provides a double-joint mold turning system, which relates to a field of mold turning device and includes an upper turning arm, a middle turning arm, a base, a middle telescopic assembly and two side telescopic assemblies. An upper mold connecting assembly is slidingly arranged on one side of the upper turning arm. An upper end of the middle turning arm is rotatably connected with a lower end of the upper turning arm. An upper end of the base is rotatably connected with a middle part of the middle turning arm, and a lower mold connecting assembly is arranged on one side of the base. Two ends of the middle telescopic assembly in a telescopic direction are respectively rotatably connected with an upper end of the upper turning arm and a lower end of the middle turning arm away from the upper mold connecting assembly. The side telescopic assemblies are arranged on two sides of the base, and two ends of the side telescopic assemblies in the telescopic direction are respectively rotatably connected with the lower end of the middle turning arm toward the upper mold connecting assembly and the lower end of the base toward the lower mold connecting assembly. The double-joint mold turning system of the disclosure increases a turning angle, avoids turning failure, reduces a space required for the turning device, which enables a turning torque to be more scientific and reasonable, and further reduces device cost.

## Description

### TECHNICAL FIELD

The disclosure relates to a field of mold turning device, and in particular to a double-joint mold turning device.

### BACKGROUND

**At** present, the blade length of wind power industry is getting longer and longer, the mold is getting larger and larger, and the blade root diameter is also getting larger and larger, which poses higher challenges to mold production and also puts higher requirements on the mold turning system. The conventional turning system is mostly a single-joint double-cylinder structure, in which two oil cylinders cooperate to realize the turning of the blade mold. This structure has the following defects. 1. The double oil cylinders are arranged on two sides of the turning arm. When turning, the two oil cylinders need to coordinate their actions at the same time, which enables debugging during the production process to be difficult. 2. Since only two oil cylinders are used, the average torque of the turning arm is very large, so the oil cylinders used in the conventional device are large-sized oil cylinders, which have high production and operating costs and occupy a large space. 3. The two oil cylinders turn at the same time, but at a certain angle, the cylinder torques will offset each other, which causes the turning force of the mechanism to decrease, the cylinder load to increase, and even the cylinder dead point to cause the turning to stop.

### SUMMARY

The disclosure provides a double-joint mold turning system to solve technical problems of a single-joint turning device having too high requirements on oil cylinder performance and unreasonable torque design.

The disclosure provides a double-joint mold turning system, and the double-joint mold turning system includes an upper turning arm, a middle turning arm, a base, a middle telescopic assembly and two sides telescopic assembly. The upper mold connecting assembly is slidingly arranged on one side of the upper turning arm, and the upper mold connecting assembly is fixedly connected with an upper mold. An upper end of the middle turning arm away from the upper mold connecting assembly is rotatably connected with a lower end of the upper turning arm away from the upper mold connecting assembly. An upper end of the base away from the upper mold connecting assembly is rotatably connected with a middle part of the middle turning arm, a lower mold connecting assembly is arranged on one side of the base, and the lower mold connecting assembly is fixedly connected with a lower mold. In a mold closing state, the upper mold connecting assembly and the lower mold connecting assembly are located on a same side. Two ends of the middle telescopic assembly in a telescopic direction are respectively rotatably connected with an upper end of the upper turning arm and a lower end of the middle turning arm away from the upper mold connecting assembly. The side telescopic assembly is arranged on two sides of the base, and two ends of the side telescopic assembly in the telescopic direction are respectively rotatably connected with the lower end of the middle turning arm toward the upper mold connecting assembly and the lower end of the base toward the lower mold connecting assembly.

In an embodiment of the double-joint mold turning system of the disclosure, the upper turning arm includes two upper arm frames and a plurality of upper connecting rods, two ends of the plurality of the upper connecting rods are respectively fixedly connected with two opposite side surfaces of the two upper arm frames, the upper end of the upper turning arm and the lower end of the upper turning arm away from the upper mold connecting assembly are respectively provided with a first rotating shaft and a second rotating shaft, two ends of the first rotating shaft and two ends of the second rotating shaft are vertically and fixedly connected with the two opposite side surfaces of the two upper arm frames respectively, the first rotating shaft is rotatably connected with a telescopic end of the middle telescopic assembly, and the second rotating shaft is rotatably connected with the upper end of the middle turning arm away from the upper mold connecting assembly.

**In** an embodiment of the double-joint mold turning system of the disclosure, the upper mold connecting assembly includes a first upper mold connecting part and a second upper mold connecting part, the first upper mold connecting part is located above the second upper mold connecting part, and the first upper mold connecting part and the second upper mold connecting part are slidingly connected with the two upper arm frames through a first sliding bar and a second sliding bar, respectively.

In an embodiment of the double-joint mold turning system of the disclosure, two sets of sliding passages are arranged on the two upper arm frames, and two ends of the first sliding bar and two ends of the second sliding bar are slidingly installed in the two sets of sliding passages respectively.

In an embodiment of the double-joint mold turning system of the disclosure, the upper turning arm further includes a locking oil cylinder, a cylinder body of the locking oil cylinder is arranged between the two upper arm frames through the connecting rod and is located between the first sliding bar and the second sliding bar, and a telescopic end of the locking oil cylinder is matched with a side end surface of the first sliding bar.

In an embodiment of the double-joint mold turning system of the disclosure, the middle turning arm includes two middle arm frames, a third rotating shaft and a fourth rotating shaft, the third rotating shaft is located at a lower end of the middle turning arm away from the upper mold connecting assembly, two ends of the third rotating shaft are vertically and fixedly connected with two opposite side surfaces of the two middle arm frames respectively, the fourth rotating shaft is located at the lower end of the middle turning arm towards the upper mold connecting assembly, two ends of the fourth rotating shaft pass through the two middle arm frames and are fixedly connected with the two middle arm frames, the third rotating shaft is rotatably connected with a cylinder end of the middle telescopic assembly, and the two ends of the fourth rotating shaft are respectively rotatably connected with telescopic ends of the two side telescopic assemblies.

In an embodiment of the double-joint mold turning system of the disclosure, a first shaft hole set and a second shaft hole set are arranged on the two middle arm frames, the first shaft hole set is located in a middle of the two middle arm frames, the second shaft hole set is located on an upper side of the first shaft hole set, and the second shaft hole set is rotatably connected with the second rotating shaft.

In an embodiment of the double-joint mold turning system of the disclosure, the base includes two base frames and a plurality of lower connecting rods, and two ends of the plurality of the lower connecting rods are respectively fixedly connected with two opposite side surfaces of the two base frames.

In an embodiment of the double-joint mold turning system of the disclosure, a fifth rotating shaft and a sixth rotating shaft are respectively arranged at the upper end of the base away from the upper mold connecting assembly and the lower end of the base toward the lower mold connecting assembly, two ends of the fifth rotating shaft are vertically and fixedly connected with the two opposite side surfaces of the two base frames respectively, two ends of the sixth rotating shaft pass through the two base frames and are fixedly connected with the two base frames, the fifth rotating shaft is rotatably connected with the middle turning arm through the first shaft hole set, and two ends of the sixth rotating shaft are respectively rotatably connected with cylinder ends of the side telescopic assemblies located on two sides of the base.

In an embodiment of the double-joint mold turning system of the disclosure, the lower mold connecting assembly includes a first lower mold connecting part and a second lower mold connecting part, the first lower mold connecting part is located above the second lower mold connecting part, and the first lower mold connecting part and the second lower mold connecting part are each fixedly connected with one of the lower connecting rods.

The double-joint mold turning system of the disclosure utilizes a rotational relationship between the base and the middle turning arm to drive the middle turning arm to turn through the side telescopic assembly, and utilizes a rotational relationship between the middle turning arm and the upper turning arm to drive the telescopic upper turning arm to turn through the middle telescopic assembly, which increases a turning angle, avoids turning failure, reduces a space required for the turning device, which enables a turning torque to be more scientific and reasonable, and further reduces device cost.

### BRIEF DESCRIPTION OF THE DRAWINGS

In order to explain technical solutions of embodiments of the disclosure more clearly, the following will briefly introduce drawings used in a description of the embodiments or the conventional art. Obviously, the drawings in the following description are only some embodiments of the disclosure. For those of ordinary skill in the art, other drawings may be obtained based on these drawings without creative work.
FIG. 1 is a schematic overall structural view of a double-joint mold turning system according to at least one embodiment of the disclosure.
FIG. 2 is a schematic structural view of an upper turning arm of the double-joint mold turning system according to at least one embodiment of the disclosure.
FIG. 3 is a schematic structural view of a middle turning arm of the double-joint mold turning system according to at least one embodiment of the disclosure.
FIG. 4 is a schematic structural view of a base of the double-joint mold turning system according to at least one embodiment of the disclosure.
FIG. 5 is a side view of the double-joint mold turning system according to at least one embodiment of the disclosure.
FIG. 6 is a schematic view of the double-joint mold turning system in a half turning state according to at least one embodiment of the disclosure.
FIG. 7 is a schematic view of the double-joint mold turning system in a complete turning state according to at least one embodiment of the disclosure.
FIG. 8 is a schematic view of an installation position of the double-joint mold turning system according to at least one embodiment of the disclosure.

### PART NUMBER DESCRIPTION

100-upper turning arm
110-upper mold connecting assembly
111-first upper mold connecting part
112-second upper mold connecting part
113-first sliding bar
114-second sliding bar
120-first rotating shaft
130-second rotating shaft
140-upper arm frame
150-upper connecting rod
160-locking oil cylinder
170-sliding passage
171-first sliding passage
172-second sliding passage
200-middle turning arm
210-middle arm frame
220-third rotating shaft
230-fourth rotating shaft
240-first shaft hole set
250-second shaft hole set
300-base
310-lower mold connecting assembly
311-first lower mold connecting part
312-second lower mold connecting part
313-lower connecting rod
320-base frame
330-fifth rotating shaft
340-sixth rotating shaft
400-middle telescopic assembly
500-side telescopic assembly
600-upper mold
700-lower mold

### DETAILED DESCRIPTION

The following describes the implementation of the disclosure through specific embodiments, and those skilled in the art can easily understand other advantages and effects of the disclosure from the content disclosed in this specification. The disclosure may also be implemented or applied through other different specific embodiments. Various details in this specification may also be modified or changed based on different viewpoints and applications without departing from the disclosure. It should be noted that, the following embodiments and the features in the embodiments can be combined with each other without conflict. It should further be understood that the terms used in the examples of the disclosure are used to describe specific embodiments, instead of limiting the protection scope of the disclosure. The test methods that do not indicate specific conditions in the following embodiments are usually in accordance with conventional conditions, or conditions recommended by each manufacturer.

When an embodiment gives a range of values, it should be understood that, unless otherwise specified in the disclosure, two endpoints of each range of values and any one of the values between the two endpoints may be selected. Unless otherwise defined, all technical and scientific terms used in the disclosure and the prior art mastered by a person skilled in the art and a description of the disclosure may also be realized by using any method, equipment and material similar to or equivalent to the prior art described in the embodiments of the disclosure.

It should be noted that terms "upper", "lower", "left", "right", "middle" and "one" quoted in this specification are only for a convenience of description, and are not used to limit a scope of the disclosure. Changes or adjustments in their relative relationships shall also be regarded to be within the scope of the disclosure when there is no substantial change in the technical content.

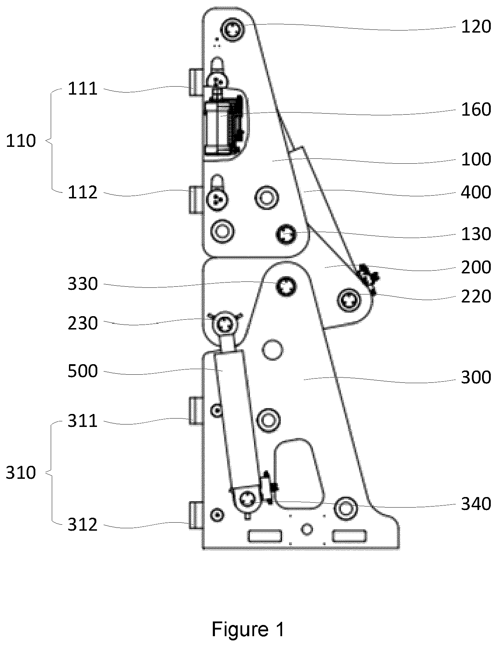

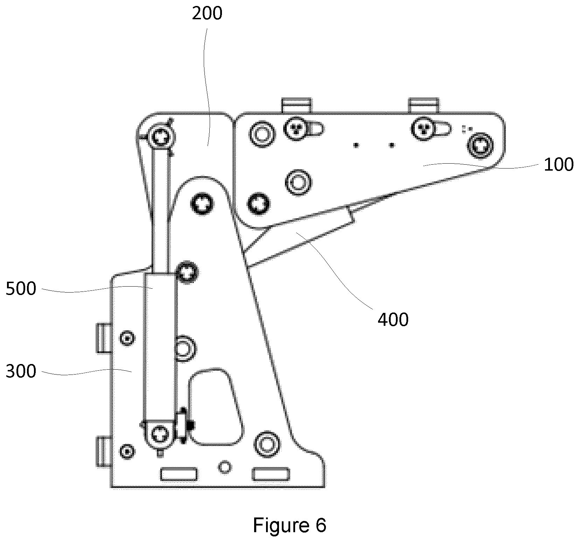

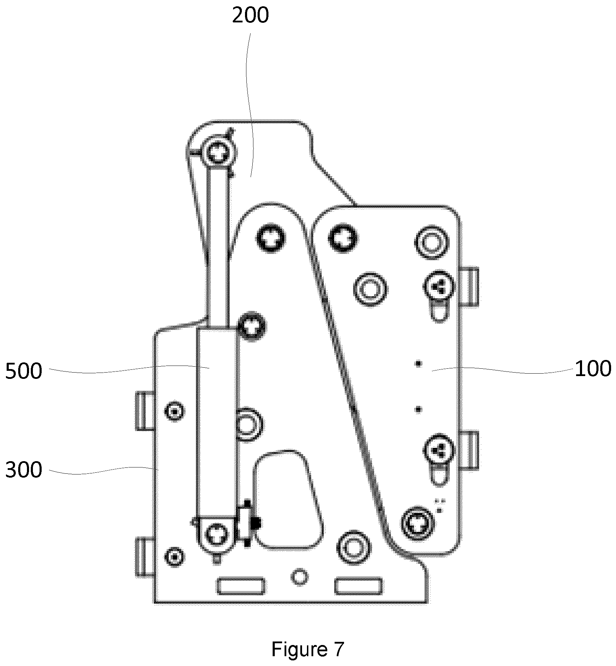

Please refer to FIG. 1, FIG. 6 and FIG. 7. FIG. 1 is a schematic overall structural view of a double-joint mold turning system according to at least one embodiment of the disclosure. FIG. 6 is a schematic view of the double-joint mold turning system in a half turning state according to at least one embodiment of the disclosure. FIG. 7 is a schematic view of the double-joint mold turning system in a complete turning state according to at least one embodiment of the disclosure. The disclosure provides a double-joint mold turning system, and the double-joint mold turning system includes an upper turning arm 100, a middle turning arm 200, a base 300, a middle telescopic assembly 400 and a side telescopic assembly 500. Following descriptions of a position relationship of various accessories are all described based on the double-joint mold turning system in a mold closing state, which means that a side of the upper turning arm 100 is an upper side, and a side of the base 300 is a lower side.

The upper mold connecting assembly 110 is slidingly arranged on one side of the upper turning arm 100, and the upper mold connecting assembly 110 is fixedly connected with an upper mold 600. An upper end of the middle turning arm 200 away from the upper mold connecting assembly 110 is rotatably connected with a lower end of the upper turning arm 100 away from the upper mold connecting assembly 110. An upper end of the base 300 away from the upper mold connecting assembly 110 is rotatably connected with a middle part of the middle turning arm 200, a lower mold connecting assembly 310 is arranged on one side of the base 300, and the lower mold connecting assembly 310 is fixedly connected with a lower mold 700. In a mold closing state, the upper mold connecting assembly 110 and the lower mold connecting assembly 310 are located on a same side. The upper turning arm 100, the middle turning arm 200 and the base 300 rotate in a same plane.

Two ends of the middle telescopic assembly 400 in a telescopic direction are respectively rotatably connected with an upper end of the upper turning arm 100 and a lower end of the middle turning arm 200 away from the upper mold connecting assembly 110. The side telescopic assembly 500 is arranged on two sides of the base 300, and two ends of the side telescopic assembly 500 in the telescopic direction are respectively rotatably connected with the lower end of the middle turning arm 200 toward the upper mold connecting assembly 110 and the lower end of the base 300 toward the lower mold connecting assembly 310. In the mold closing state, the upper mold connecting assembly 110 and the lower mold connecting assembly 310 are located on a same side, the middle telescopic assembly 400 is in an extended state, and the side telescopic assembly 500 is in a retracted state. The middle telescopic assembly 400 and the side telescopic assembly 500 may be assemblies with telescopic functions such as oil cylinders, air cylinders or leadscrews, and in this embodiment, the oil cylinders are preferred.

In the mold closing state of the molds, the side telescopic assembly 500 retracts and the middle telescopic assembly 400 extends. At this time, the upper mold connecting assembly 110 and the lower mold connecting assembly 310 are located in a same vertical plane. When a mold needs to be opened, the side telescopic assembly 500 is first extended to drive the middle turning arm 200 to turn 90°, so that the upper turning arm 100 and the upper mold 600 follow the middle turning arm 200 to turn 90°, and then the middle telescopic assembly 400 retracts to drive the upper turning arm 100 and the upper mold 600 to turn 90°, so that the upper turning arm 100 and the upper mold 600 turn 180° in total to complete a mold opening. When closing the mold, the middle telescopic assembly 400 is first extended to drive the upper turning arm 100 and the upper mold 600 to rotate back for 90°, and then the side telescopic assembly 500 is retracted to drive the middle turning arm 200, the upper turning arm 100 and the upper mold 600 to rotate back for 90°, so that the upper mold 600 and the lower mold 700 are closed.

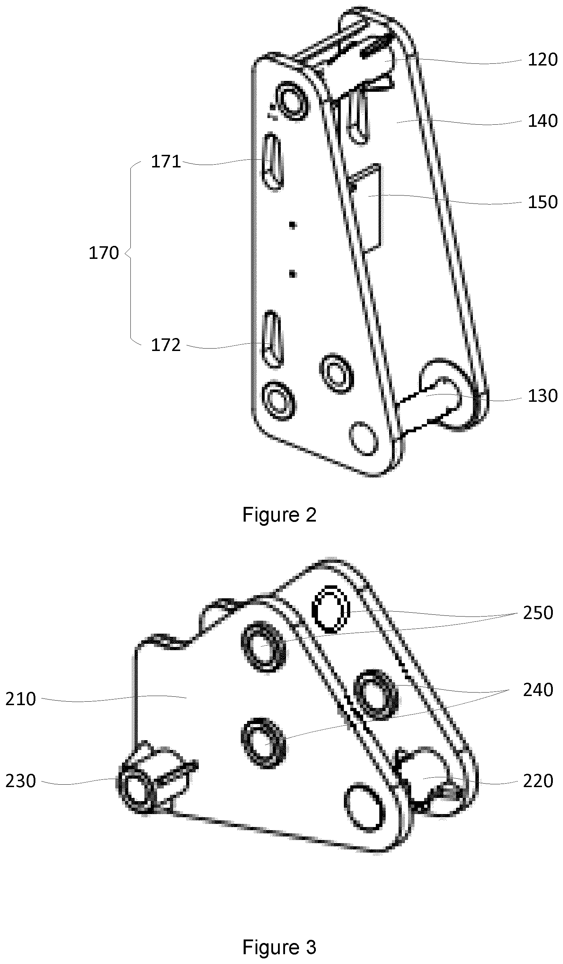

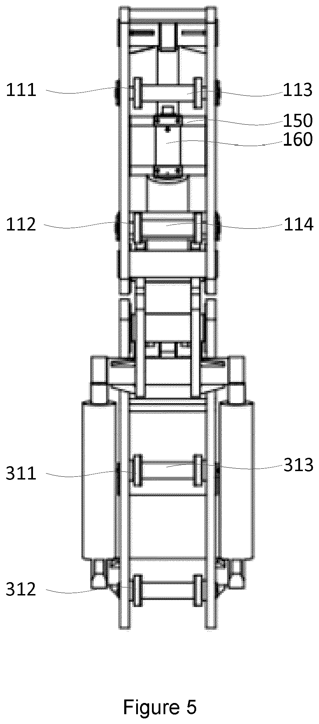

Please refer to FIG. 1, FIG. 2 and FIG. 5. FIG. 2 is a schematic structural view of an upper turning arm of the double-joint mold turning system according to at least one embodiment of the disclosure. FIG. 5 is a side view of the double-joint mold turning system according to at least one embodiment of the disclosure. In an embodiment of the double-joint mold turning system of the disclosure, the upper turning arm 100 includes two upper arm frames 140 and a plurality of upper connecting rods 150. Two ends of the plurality of upper connecting rods 150 are fixedly connected with two opposite side surfaces of the two upper arm frames 140 respectively. The upper end of the upper turning arm 100 and the lower end of the upper turning arm 100 away from the upper mold connecting assembly 110 are respectively provided with a first rotating shaft 120 and a second rotating shaft 130. Two ends of the first rotating shaft 120 and two ends of the second rotating shaft 130 are vertically and fixedly connected with the two opposite side surfaces of the two upper arm frames 140 respectively. Of course, the two ends of the first rotating shaft 120 and the two ends of the second rotating shaft 130 may also be rotatably connected with the two opposite side surfaces of the two upper arm frames 140. The first rotating shaft 120 is rotatably connected with a telescopic end of the middle telescopic assembly 400, and the second rotating shaft 130 is rotatably connected with an upper end of the middle turning arm 200 away from the upper mold connecting assembly 110. The middle telescopic assembly 400 includes a middle oil cylinder, two ends of the middle oil cylinder in the telescopic direction are provided with shaft sleeves, and the telescopic end of the middle oil cylinder is rotatably connected with the first rotating shaft 120 through the corresponding shaft sleeves.

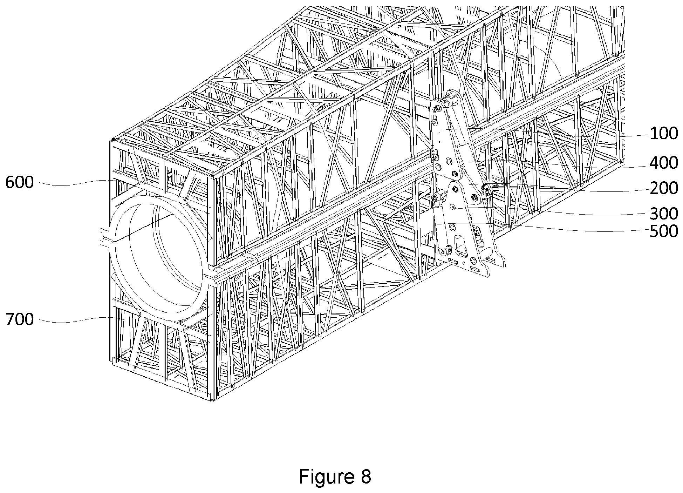

Please refer to FIG. 1, FIG. 5 and FIG. 8. FIG. 8 is a schematic view of an installation position of the double-joint mold turning system according to at least one embodiment of the disclosure. In an embodiment of the double-joint mold turning system of the disclosure, the upper mold connecting assembly 110 includes a first upper mold connecting part 111 and a second upper mold connecting part 112, the first upper mold connecting part 111 is located above the second upper mold connecting part 112, and the first upper mold connecting part 111 and the second upper mold connecting part 112 are slidingly connected with the two upper arm frames 140 through a first sliding bar 113 and a second sliding bar 112 respectively. The first upper mold connecting part 111 includes two first connecting plates, and the second upper mold connecting part 112 includes two second connecting plates. First ends of the first connecting plate and the second connecting plate are fixedly connected with the upper mold 600, and second ends thereof are fixedly connected with the side end surfaces of the first sliding bar 113 and the second sliding bar 114 respectively. In another embodiment, the first upper mold connecting part 111 includes a first connecting post, the second upper mold connecting part 112 includes a second connecting post.

Please refer to FIG. 1, FIG. 2 and FIG. 5. In an embodiment of the double-joint mold turning system of the disclosure, two sets of sliding passages 170 are arranged on the two upper arm frames 140. In the mold closing state, the sliding directions of the sliding passages 170 are perpendicular to a horizontal plane. Two ends of the first sliding bar 113 and two ends of the second sliding bar 114 are slidingly installed in the two sets of sliding passages 170 respectively. The two sliding passages 170 each include a first sliding passage 171 and a second sliding passage 172, the first sliding passage 171 is located above the second sliding passage 172, the two ends of the first sliding bar 113 are slidingly installed in the two first sliding passages 171 and slide along the first sliding passages 171, and the two ends of the second sliding bar 114 are slidingly installed in the two second sliding passages 172 and slide along the second sliding passages 172.

Please refer to FIG. 1 and FIG. 5. In an embodiment of the double-joint mold turning system of the disclosure, the upper turning arm 100 further includes a locking oil cylinder 160, and a cylinder body of the locking oil cylinder 160 is arranged between the two upper arm frames 140 through the connecting rod. The locking oil cylinder 160 is located between the first sliding bar 113 and the second sliding bar 114, and a telescopic end of the locking oil cylinder 160 is matched with a side end surface of the first sliding bar 113. When the mold is opened, a lifting cylinder on the mold first lifts the upper mold 600 to a certain height. At this time, the upper mold connecting assembly 110 follows the lifting through the sliding passage 170 to be lifted, and then controls the telescopic end of the locking oil cylinder 160 to extend and resist upward against the first sliding bar 113, thereby limiting a sliding function of the first sliding bar 113, so that positions of the upper mold connecting assembly 110 and the upper mold 600 fixedly connected thereto are fixed, which achieves that during a turning process, there is no relative movement between the upper mold 600 and the upper turning arm 100.

Please refer to FIG. 1 and FIG. 3. In an embodiment of the double-joint mold turning system of the disclosure, the middle turning arm 200 includes two middle arm frames 210, a third rotating shaft 220, and a fourth rotating shaft 230. The third rotating shaft 220 is located at a lower end of the middle turning arm 200 away from the upper mold connecting assembly 110, and two ends of the third rotating shaft 220 are vertically and fixedly connected with the two opposite side surfaces of the two middle arm frames 210 respectively. The fourth rotating shaft 230 is located at the lower end of the middle turning arm 200 facing the upper mold connecting assembly 110, and two ends of the fourth rotating shaft 230 pass through the two middle arm frames 210 and are vertically and fixedly connected with the two middle arm frames 210. The two ends of the fourth rotating shaft 230 are on an outer side of the two middle arm frames 210. A cylinder end of the middle oil cylinder is rotatably connected with the third rotating shaft 220 through the shaft sleeve, and the two ends of the fourth rotating shaft 230 are rotatably connected with telescopic ends of the side telescopic assemblies 500 located on the two sides of the base 300 respectively. The side telescopic assembly 500 includes a side oil cylinder, and two ends of the side oil cylinder in the telescopic direction are provided with the shaft sleeves. Telescopic ends of the side oil cylinders on the two sides of the base 300 are rotatably connected with the two ends of the first rotating shaft 120 through the shaft sleeves. A distance between two opposite end surfaces of the two middle arm frames 210 is less than a length of the upper connecting rod 150.

Please refer to FIG. 1 and FIG. 3. In an embodiment of the double-joint mold turning system of the disclosure, a first shaft hole set 240 and a second shaft hole set 250 are arranged on the two middle arm frames 210, the first shaft hole set 240 is located in a middle of the two middle arm frames 210, the second shaft hole set 250 is located on an upper side of the first shaft hole set 240, and the second shaft hole set 250 is rotatably connected with the second rotating shaft 130. A wheelbase between the first shaft hole set 240 and the second shaft hole set 250 may be adjusted according to actual conditions. A parting surface height between the upper mold 600 and the lower mold 700 is located between an axle center height of the first shaft hole set 240 and an axle center height of the second shaft hole set 250.

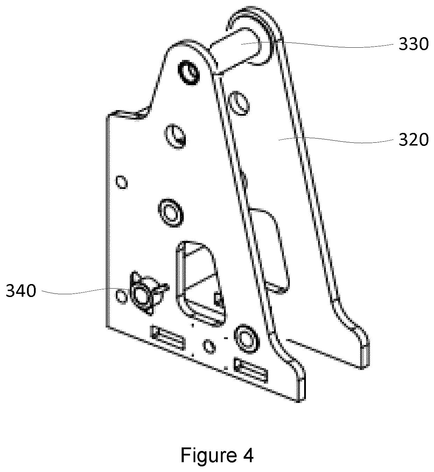

Please refer to FIG. 1, FIG. 4 and FIG. 5. In an embodiment of the double-joint mold turning system of the disclosure, the base 300 includes two base frames 320 and a plurality of lower connecting rods 313, and two ends of the plurality of lower connecting rods 313 are respectively fixedly connected with two opposite side surfaces of the two base frames 320. A length of the lower connecting rod 313 is greater than a distance between the two opposite end surfaces of the two middle arm frames 210.

Please refer to FIG. 1, FIG. 4 and FIG. 5. In an embodiment of the double-joint mold turning system of the disclosure, a fifth rotating shaft 330 and a sixth rotating shaft 340 are respectively arranged at the upper end of the base 300 away from the upper mold connecting assembly 110 and the lower end of the base 300 toward the lower mold connecting assembly 310. Two ends of the fifth rotating shaft 330 are vertically and fixedly connected with the two opposite side surfaces of the two base frames 320 respectively. Two ends of the sixth rotating shaft 340 pass through the two base frames 320 and are fixedly connected with the two base frames 320. The fifth rotating shaft 330 is rotatably connected with the middle turning arm 200 through the first shaft hole set 240, and two ends of the sixth rotating shaft 340 are respectively rotatably connected with cylinder ends of the side oil cylinder located on two sides of the base 300 through the shaft sleeves. The two ends of the sixth rotating shaft 340 are located at an outer side the two base frames 320. During operation, telescopic pushing and pulling forces of a side oil cylinder act on the fourth rotating shaft 230 and the sixth rotating shaft 340. A reaction force of the middle turning arm 200 during a turning process does not affect an inner cavity of the side oil cylinder, which can not only protect the side oil cylinder, but also maximize a use of the pushing force of the side oil cylinder, thereby increasing a turning torque of the entire double-joint mold turning system. At the same time, an area occupied by the base 300 is reduced, and a utilization rate of a production space is increased.

Please refer to FIG. 1, FIG. 5 and FIG. 8. In an embodiment of the double-joint mold turning system of the disclosure, the lower mold connecting assembly 310 includes a first lower mold connecting part 311 and a second lower mold connecting part 312, the first lower mold connecting part 311 is located above the second lower mold connecting part 312, and the first lower mold connecting part 311 and the second lower mold connecting part 312 are each fixedly connected with one of the lower connecting rods 313. The first lower mold connecting part 311 includes two third connecting plates, and the second lower mold connecting part 312 includes two fourth connecting plates. First ends of the third connecting plate and the fourth connecting plate are both fixedly connected with the lower mold 700, and second ends of the third connecting plate and the fourth connecting plate are fixedly connected with one of the lower connecting rods 313 respectively.

The double-joint mold turning system of the disclosure has beneficial effects of scientifically designing the turning torque, reducing a specification limit of a power structure, and reducing cost and production space. Therefore, the disclosure effectively overcomes some practical problems in the prior art, thereby having high utilization value and use significance. The above embodiments only illustrate principles and effects of the disclosure, but are not intended to limit the disclosure. Anyone familiar with this technology may modify or change the above embodiments without departing from a scope of the disclosure. Therefore, all equivalent modifications or changes made by those with ordinary knowledge in the technical field shall still be covered by the claims of the disclosure.

## Claims

1. A double-joint mold turning system, comprising:
an upper turning arm (100), an upper mold connecting assembly (110) slidingly arranged on one side of the upper turning arm, and the upper mold connecting assembly fixedly connected with an upper mold (600);
a middle turning arm (200), an upper end of the middle turning arm (200) away from the upper mold connecting assembly (110) rotatably connected with a lower end of the upper turning arm (200) away from the upper mold connecting assembly (110);
a base (300), an upper end of the base (300) away from the upper mold connecting assembly (110) rotatably connected with a middle part of the middle turning arm (200), a lower mold connecting assembly (310) arranged on one side of the base (300), the lower mold connecting assembly (310) fixedly connected with a lower mold (700), and in a mold closing state, the upper mold connecting assembly (110) and the lower mold connecting assembly (310) located on a same side;
a middle telescopic assembly (400), two ends of the middle telescopic assembly in a telescopic direction respectively rotatably connected with an upper end of the upper turning arm (100) and a lower end of the middle turning arm (200) away from the upper mold connecting assembly (110); and
a side telescopic assembly (500), the side telescopic assembly arranged on two sides of the base (300), and two ends of the side telescopic assembly in the telescopic direction respectively rotatably connected with the lower end of the middle turning arm (200) toward the upper mold connecting assembly (110) and the lower end of the base (300) toward the lower mold connecting assembly (310).

2. The double-joint mold turning system according to claim 1, wherein, the upper turning arm comprises two upper arm frames and a plurality of upper connecting rods, two ends of the plurality of the upper connecting rods are respectively fixedly connected with two opposite side surfaces of the two upper arm frames, the upper end of the upper turning arm and the lower end of the upper turning arm away from the upper mold connecting assembly are respectively provided with a first rotating shaft and a second rotating shaft, two ends of the first rotating shaft and two ends of the second rotating shaft are vertically and fixedly connected with the two opposite side surfaces of the two upper arm frames respectively, the first rotating shaft is rotatably connected with a telescopic end of the middle telescopic assembly, and the second rotating shaft is rotatably connected with the upper end of the middle turning arm away from the upper mold connecting assembly.

3. The double-joint mold turning system according to claim 2, wherein, the upper mold connecting assembly comprises a first upper mold connecting part and a second upper mold connecting part, the first upper mold connecting part is located above the second upper mold connecting part, and the first upper mold connecting part and the second upper mold connecting part are slidingly connected with the two upper arm frames through a first sliding bar and a second sliding bar, respectively.

4. The double-joint mold turning system according to claim 3, wherein, two sets of sliding passages are arranged on the two upper arm frames, and two ends of the first sliding bar and two ends of the second sliding bar are slidingly installed in the two sets of sliding passages respectively.

5. The double-joint mold turning system according to claim 4, wherein, the upper turning arm further comprises a locking oil cylinder, a cylinder body of the locking oil cylinder is arranged between the two upper arm frames through the connecting rod and is located between the first sliding bar and the second sliding bar, and a telescopic end of the locking oil cylinder is matched with a side end surface of the first sliding bar.

6. The double-joint mold turning system according to claim 2, wherein, the middle turning arm comprises two middle arm frames, a third rotating shaft and a fourth rotating shaft, the third rotating shaft is located at a lower end of the middle turning arm away from the upper mold connecting assembly, two ends of the third rotating shaft are vertically and fixedly connected with two opposite side surfaces of the two middle arm frames respectively, the fourth rotating shaft is located at the lower end of the middle turning arm towards the upper mold connecting assembly, two ends of the fourth rotating shaft pass through the two middle arm frames and are fixedly connected with the two middle arm frames, the third rotating shaft is rotatably connected with a cylinder end of the middle telescopic assembly, and the two ends of the fourth rotating shaft are respectively rotatably connected with telescopic ends of the two side telescopic assemblies.

7. The double-joint mold turning system according to claim 6, wherein, a first shaft hole set and a second shaft hole set are arranged on the two middle arm frames, the first shaft hole set is located in a middle of the two middle arm frames, the second shaft hole set is located on an upper side of the first shaft hole set, and the second shaft hole set is rotatably connected with the second rotating shaft.

8. The double-joint mold turning system according to claim 7, wherein, the base comprises two base frames and a plurality of lower connecting rods, and two ends of the plurality of the lower connecting rods are respectively fixedly connected with two opposite side surfaces of the two base frames.

9. The double-joint mold turning system according to claim 8, wherein, a fifth rotating shaft and a sixth rotating shaft are respectively arranged at the upper end of the base away from the upper mold connecting assembly and the lower end of the base toward the lower mold connecting assembly, two ends of the fifth rotating shaft are vertically and fixedly connected with the two opposite side surfaces of the two base frames respectively, two ends of the sixth rotating shaft pass through the two base frames and are fixedly connected with the two base frames, the fifth rotating shaft is rotatably connected with the middle turning arm through the first shaft hole set, and two ends of the sixth rotating shaft are respectively rotatably connected with cylinder ends of the side telescopic assemblies located on two sides of the base.

10. The double-joint mold turning system according to claim 8, wherein, the lower mold connecting assembly comprises a first lower mold connecting part and a second lower mold connecting part, the first lower mold connecting part is located above the second lower mold connecting part, and the first lower mold connecting part and the second lower mold connecting part are each fixedly connected with one of the lower connecting rods.
